Europäisches Patentamt

European Patent Office

Office européen des brevets

(11) Veröffentlichungsnummer: **0 342 426**
**A1**

(12) **EUROPÄISCHE PATENTANMELDUNG**

(21) Anmeldenummer: 89107854.5

(51) Int. Cl.⁴: **B60B 21/10 , B60C 15/02**

(22) Anmeldetag: 29.04.89

(30) Priorität: 10.05.88 DE 3815926

(43) Veröffentlichungstag der Anmeldung:
23.11.89 Patentblatt 89/47

(84) Benannte Vertragsstaaten:
AT DE ES FR GB IT

(71) Anmelder: **Continental Aktiengesellschaft**
**Königsworther Platz 1**
**D-3000 Hannover 1(DE)**

(72) Erfinder: **Frerichs, Udo**
**Buchenweg 7**
**D-3012 Langenhagen 8(DE)**
Erfinder: **Kuhlmann, Eckhard**
**Davenstedter Platz 4**
**D-3000 Hannover 91(DE)**
Erfinder: **Köhler, Heinrich**
**Kolpingstrasse 4**
**D-3207 Harsum(DE)**
Erfinder: **Metge, Axel**
**Wedelstrasse 4**
**D-3000 Hannover 1(DE)**

(54) Füllring für ein Fahrzeugrad.

(57) Die Erfindung bezieht sich auf einen Füllring für ein luftbereiftes Fahrzeugrad, bei dem der Reifen mit seinen Wülsten (13) am radial inneren Umfang einer Tiefbettfelge neben sich im wesentlichen nach radial innen erstreckenden Felgenhörnern (18) befestigt ist, wobei der Füllring zum Ausfüllen des Raumes zwischen dem Reifenwulst (13) und der Tiefbettwand dient und mehrere umlaufende Hohlkammern (5) aufweist, die in radialer Richtung durch eine Diagonalrippe (6) in zwei Ebenen aufgeteilt sind und von denen in jeder Ebene in axialer Richtung zumindest zwei angeordnet sind, und wobei die am Reifenwulst (13) anliegende Seitenwand (1) senkrecht zur Drehachse des Füllrings und die gegenüberliegende Schrägwand (2) um etwa 80° geneigt zur Drehachse verläuft und die Diagonalrippe (6) an der Seitenwand in der radial inneren Hälfte und an der Schrägwand (2) in der radial äußeren Hälfte endet. Um ein Vermeiden einer Verschiebung des Füllrings nach radial innen nochmals zu verbessern, wird vorgeschlagen, daß die Diagonalrippe (6) mit dem radial inneren Teil der Schrägwand (2) einen Winkel von weniger als 90° einschließt.

FIG.1 <90°

## Füllring für ein Fahrzeugrad

Die Erfindung betrifft einen aus Gummi oder Kunststoff bestehenden Füllring für ein luftbereiftes Fahrzeugrad, bei dem der Reifen mit seinen Wülsten am radial inneren Umfang einer Tiefbettfelge neben sich im wesentlichen nach radial innen erstreckenden Felgenhörnern befestigt ist, wobei der Füllring zum Ausfüllen des Raumes zwischen dem Reifenwulst und der Tiefbettwand dient und mehrere umlaufende Hohlkammern aufweist, die in radialer Richtung durch eine Diagonalrippe in zwei Ebenen aufgeteilt sind und von denen in jeder Ebene in axialer Richtung zumindest zwei angeordnet sind, und wobei die am Reifenwulst anliegende Seitenwand senkrecht zur Drehachse des Füllrings und die gegenüberliegende Schrägwand um etwa 80° geneigt zur Drehachse verläuft und die Diagonalrippe an der Seitenwand in der radial inneren Hälfte und an der Schrägwand in der radial äußeren Hälfte endet.

Ein derartiger Füllring ist aus der EP-A-236 706 bekannt. Der vorbekannte Füllring erfüllt nicht nur die Aufgabe, den Einbauraum axial innen von den Reifenwülsten so vollständig abzudichten, daß kein Schmutz- und Spritzwasser in diesen Raum eindringen kann, sondern ermöglicht auch bereits einen einfacheren Einbau in ein Fahrzeugrad und weist auch bereits die Eigenschaft auf, im Fall von geringfügigen Bewegungen des Reifenwulstes in extremen Fahrsituationen ein Ausbrechen nach radial innen hin zu vermeiden.

Der vorliegenden Erfindung liegt die Aufgabe zugrunde, die letztgenannte Eigenschaft, nämlich ein zuverlässiges Vermeiden einer Verschiebung des Füllrings nach radial innen in extremen Fahrsituationen, nochmals zu verbessern.

Diese Aufgabe wird erfindungsgemäß dadurch gelöst, daß die Diagonalrippe mit dem radial inneren Teil der Schrägwand einen Winkel von weniger als 90° einschließt.

Zur Lösung der Teilaufgabe, eine vereinfachte Montage des Füllrings in den Fällen zu ermöglichen, in denen sich zwischen Felgenschüssel und Felgenhorn nur ein relativ geringer Abstand befindet, wird vorgeschlagen, daß der Füllring als zweiteiliger Ring vorliegt, bei dem die Teilungsfläche im Bereich der Diagonalrippe liegt.

Durch die Steilerstellung der Diagonalrippe wird für den Fall, daß der Reifenwulst Kräfte auf den Füllring ausübt, eine Radialkraftkomponente erzeugt, die nach radial außen gerichtet ist und damit einem Wandern des Füllrings nach radial innen entgegenwirkt. Gemäß einer Weiterbildung der Erfindung wird dieser Effekt noch dadurch verstärkt, daß auf der Außenseite der am Reifenwulst anliegenden Seitenwand des Füllrings Rastmittel vorhanden sind, mit denen eine Verriegelung des Füllrings mit dem Reifenwulst stattfindet. Gemäß einer weiteren Ausgestaltung der Erfindung befinden sich auf der Außenseite des Füllrings an der Seitenwand und an der Schrägwand mehrere umlaufende Dichtlippen, deren freie Enden schräg nach radial innen weisen.

Durch eine Zweiteilung des Füllrings im Bereich der Diagonalrippe erzielt man den Vorteil einer erheblich vereinfachten Montage, weil die radiale Erstreckung des Füllringquerschnitts praktisch halbiert wird und man in einfachster Weise zunächst die äußere Hälfte des Füllrings montiert und anschließend die innere Hälfte hinterherschiebt.

Nachfolgend wird die Erfindung anhand einer Zeichnung näher erläutert. Es zeigt:

Fig. 1 einen Füllring mit sieben umlaufenden Hohlkammern in zwei Ebenen in einem radialen Teilschnitt,

Fig. 2 einen im Bereich der Diagonalrippe zweigeteilten Füllring mit umlaufenden Hohlkammern in je einer Ebene in einem radialen Teilschnitt,

Fig. 3 ein Fahrzeugrad mit einem eingebauten Füllring in einem radialen Teilschnitt.

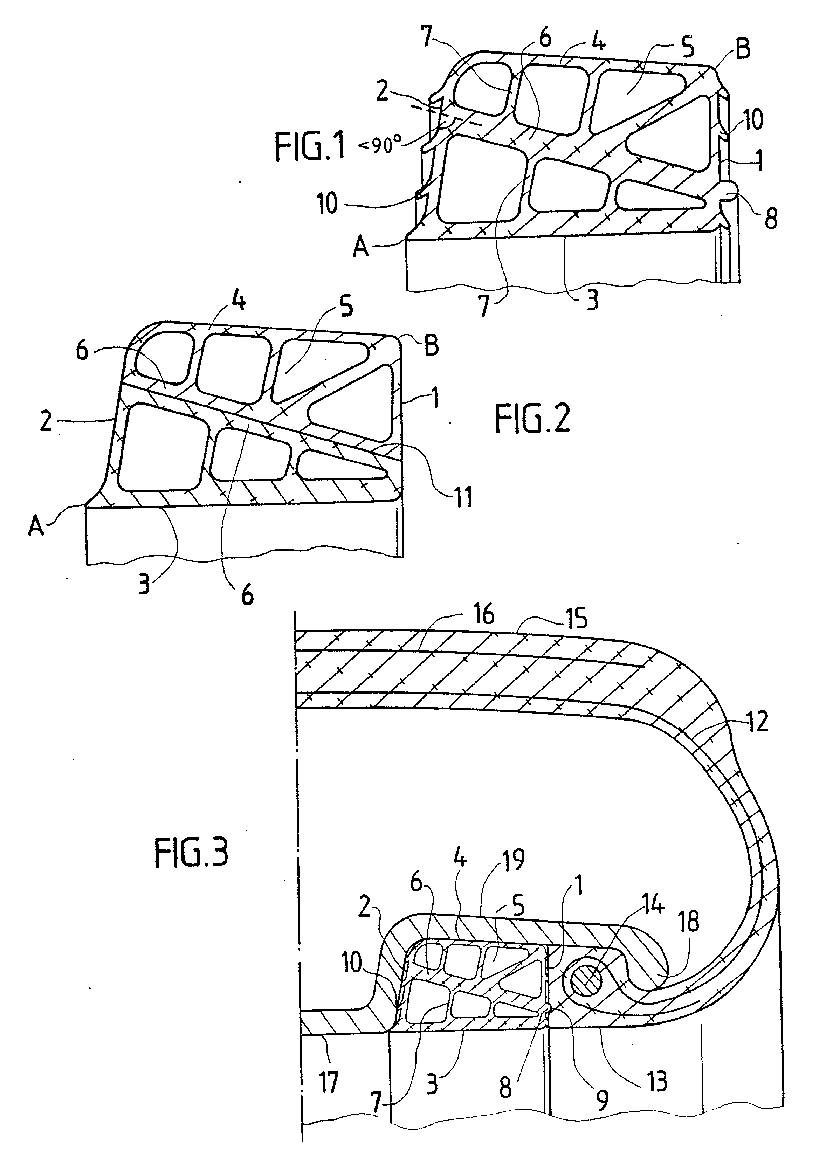

Der in Fig. 1 dargestellte Füllring weist eine zu seiner Drehachse vertikal verlaufende Seitenwand 1 auf, die nach der Montage an einem Reifenwulst anliegt. Die gegenüberliegende Schrägwand 2 ist mit etwa 10° gegenüber der Vertikalen geneigt, entsprechend der Neigung der Wand einer Tiefbettfelge.

Die radial innere Wand 3 des Füllrings verläuft im wesentlichen parallel zur Drehachse, während die radial äußere Wand 4 geneigt verläuft, so daß sie in dem dem Felgentiefbett zugewandten Bereich den größten Füllringdurchmesser bildet. Bei Füllringen für PKW-Reifen beträgt die Neigung der Wand 4 genau 5°. Die umlaufenden Hohlkammern 5 sind in zwei Ebenen angeordnet, und zwar vier in der oberen und drei in der unteren Ebene, wobei die beiden Ebenen durch eine Innenwand in Form einer Diagonalrippe 6 voneinander getrennt werden.

Die Diagonalrippe 6 endet an der Seitenwand 1 in der radial inneren Hälfte und an der Schrägwand 2 in der radial äußeren Hälfte. Sie ist so steil gestellt, daß sie mit dem radial inneren Teil der Schrägwand 2 einen Winkel von weniger als 90°, bevorzugt 80 bis 85° einschließt. Sie weist bei Füllringen für PKW-Reifen eine Wandstärke von 2 bis 4 mm, bevorzugt ca. 3 mm auf.

Die in jeder der beiden Ebenen befindlichen Hohlkammern 5 werden durch schmale Zwischenwände in Form von Querrippen 7 (im wesentlichen quer zur Diagonalrippe 6 verlaufend) voneinander getrennt, wobei die Zwischenwände 7 in den beiden Ebenen versetzt zueinander verlaufen. Dadurch werden die Knicklängen der Diagonalrippe 6 auf ein so kleines Maß reduziert, daß die erfindungsgemäße Wirkung aufgrund der Steilerstellung der Rippe 6 noch verbessert wird. Der in Fig. 1 dargestellte Füllring ist nach der Methode der finiten Elemente optimiert worden, wobei es darauf ankam, die mit A und B bezeichneten Stellen zum Zwecke eines einfacheren Einbaues weicher zu gestalten als die anderen beiden Kanten. Dies hat man außer mit der in Fig. 1 dargestellten Querschnittskontur vor allem dadurch erreicht, daß die Außenwände 1, 2 und 4 sowie die Zwischenwände 7 sehr dünn ausgebildet werden (Dicke ca. 1-2 mm), während die Wände 3 und 6 eine Dicke von ca. 3 mm aufweisen sollten, jedoch mit der Ausnahme, daß die Wand 3 auf der Länge der axial und radial innen befindlichen Hohlkammer 5 eine Dicke von ca. 2 mm aufweisen sollte.

Der Füllring der Fig. 1 weist auf der Außenseite der Seitenwand 1 als Rastmittel eine umlaufende Rippe 8 auf, die zum Verriegeln mit einem Reifenwulst nach der Montage in eine entsprechende Nut 9 des Wulstes taucht (Fig. 3). Selbstverständlich können bei Bedarf die Verhältnisse auch umgekehrt vorliegen, so daß eine Rippe am Wulst in eine Nut am Füllring taucht. Schließlich ist der Füllring der Fig. 1 noch mit mehreren schräggestellten Dichtlippen 10 versehen, die sich an der senkrechten Seite 1 und an der Schrägseite 2 befinden. Sie sorgen dafür, daß selbst im Falle geringer Verschiebungen des Rings die Dichtfunktion voll erhalten bleibt. Es ist zweckmäßig, auf jeder Seite drei bis vier Dichtlippen 10 vorzusehen.

Der Füllring der Fig. 2 zeichnet sich durch eine Zweiteilung auf der Linie 11 aus, die etwa die Mittellinie der Diagonalrippe 6 darstellt. Ansonsten ist der Ring bis auf die Rippe 8 und die Dichtlippen 10 entsprechend dem der Fig. 1 aufgebaut. Durch die Zweiteilung ergibt sich eine wesentlich vereinfachte Montage in den Fällen, in denen die freie Einbauhöhe zwischen Felgenhorn und Felgenschüssel besonders klein gestaltet ist.

Fig. 3 zeigt in einem radialen Teilschnitt ein Fahrzeugrad, bei dem der Füllring der Fig. 1 montiert ist. Bei einem aus Gummi oder gummiähnlichen Kunststoffen bestehenden Fahrzeugluftreifen ist eine Karkasse 12 in den Wülsten 13 durch Umschlingen von zug-und druckfesten Wulstkernen 14 verankert, während sich zwischen dem Laufstreifen 15 und der Karkasse 12 ein üblicher Verstärkungsgürtel 16 befindet. Die Reifenwülste 13 sind am radial inneren Umfang einer Tiefbettfelge 17 neben sich im wesentlichen nach radial innen erstreckenden Felgenhörnern 18 angeordnet. Die sich axial innen an die Felgenhörner 18 anschließenden Bereiche 19 der Felge 17 dienen als Pannenlaufstützflächen zur Abstützung des Reifens im Defektfall. Der Bereich 19 der Felge 17 verläuft in Querrichtung geneigt, so daß auf der radial inneren Seite neben den Reifenwülsten 13 ein Montagehochbett für den Reifen gebildet wird.

Nach der Montage des Reifens auf die einteilige Felge 17 wird der Raum neben den Reifenwülsten 13, der das Montagehochbett umfaßt, mit einem Füllring der beschriebenen Art verschlossen, so daß kein Schmutz- und Spritzwasser in diesen Raum eindringen kann.

Die vorstehend beschriebenen Füllringe sind bevorzugt aus einem Gummi hergestellt, dessen Shore-Härte A zwischen 80 und 90 und dessen Bruchdehnung mehr als 250% beträgt (DIN 53504). Die Materialdichte sollte etwa 1,40 g/ccm betragen.

## Ansprüche

1. Aus Gummi oder Kunststoff bestehender Füllring für ein luftbereiftes Fahrzeugrad, bei dem der Reifen mit seinen Wülsten am radial inneren Umfang einer Tiefbettfelge neben sich im wesentlichen nach radial innen erstreckenden Felgenhörnern befestigt ist, wobei der Füllring zum Ausfüllen des Raumes zwischen dem Reifenwulst und der Tiefbettwand dient und mehrere umlaufende Hohlkammern aufweist, die in radialer Richtung durch eine Diagonalrippe in zwei Ebenen aufgeteilt sind und von denen in jeder Ebene in axialer Richtung zumindest zwei angeordnet sind, und wobei die am Reifenwulst anliegende Seitenwand senkrecht zur Drehachse des Füllrings und die gegenüberliegende Schrägwand um etwa 80° geneigt zur Drehachse verläuft und die Diagonalrippe an der Seitenwand in der radial inneren Hälfte und an der Schrägwand in der radial äußeren Hälfte endet, **dadurch gekennzeichnet**, daß die Diagonalrippe (6) mit dem radial inneren Teil der Schrägwand (2) einen Winkel von weniger als 90° einschließt.

2. Füllring nach Anspruch 1, dadurch gekennzeichnet, daß zu beiden Seiten der Diagonalrippe (6) vorhandene Querrippen (7), die Zwischenwände für die Hohlkammer (5) bilden, versetzt zueinander angeordnet sind.

3. Füllring nach Anspruch 1, dadurch gekennzeichnet, daß die Diagonalrippe (6) eine Wandstärke von 2 bis 4 mm aufweist.

4. Füllring nach Anspruch 1, dadurch gekennzeichnet, daß sich in der radial inneren Ebene drei und in der radial äußeren Ebene drei oder vier Hohlkammern (5) befinden.

5. Füllring nach Anspruch 1, dadurch gekennzeichnet, daß er auf der Außenseite der am Reifenwulst anliegenden Seitenwand (1) ein Rastmittel (Rippe 8) aufweist, mit dem er mit dem benachbarten Wulst verriegelbar ist.

6. Füllring nach Anspruch 1, dadurch gekennzeichnet, daß er auf den Außenseiten der Seiten- und der Schrägwand (1,2) zumindest je eine Dichtlippe (10) aufweist.

7. Füllring nach Anspruch 1, dadurch gekennzeichnet, daß er als zweiteiliger Ring vorliegt, bei dem die Teilungsfläche im Bereich der Diagonalrippe (6) liegt.

EP 0 342 426 A1

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 634 678 (CONTINENTAL) * Spalte 3, Zeile 57 - Spalte 4, Zeile 4; Spalte 4, Zeilen 30-44; Figuren 1-7 * --- | 1 | B 60 B 21/10 B 60 C 15/02 |
| A | EP-A-0 222 391 (INTERNATIONAL TECHNICAL RESEARCH) * Spalte 10, Zeilen 7-33; Figur 7 * --- | 1 | |
| A | DE-A-3 608 584 (CONTINENTAL) * Spalte 3, Zeilen 15-21; Figur 2 * ----- | 1 | |

RECHERCHIERTE SACHGEBIETE (Int. Cl.4)

B 60 B
F 16 F

Der vorliegende Recherchenbericht wurde für alle Patentansprüche erstellt

| Recherchenort | Abschlußdatum der Recherche | Prüfer |
|---|---|---|
| DEN HAAG | 18-08-1989 | AYITER I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument

EPO FORM 1503 03.82 (P0403)